# EUROPÄISCHE PATENTSCHRIFT

(11) **EP 4 566 794 B1**
(45) Veröffentlichungstag und Bekanntmachung des Hinweises auf die Patenterteilung: **09.12.2026**
(21) Anmeldenummer: 25172309.4
(22) Anmeldetag: 26.05.2023
(51) Int. Cl.: B29C 49/36, B29C 49/42, B29C 49/46, B29C 49/56, B29C 49/06, B29C 49/12, B29L 31/00, B29C 49/48

(54) **VORRICHTUNG UND VERFAHREN ZUM UMFORMEN VON KUNSTSTOFFVORFORMLINGEN ZU KUNSTSTOFFBEHÄLTNISSEN**
DEVICE AND METHOD FOR FORMING PLASTIC PREFORMS INTO PLASTIC CONTAINERS
DISPOSITIF ET PROCÉDÉ DE DÉFORMATION D'ÉBAUCHES EN PLASTIQUE EN RÉCIPIENTS EN PLASTIQUE

(30) Priorität: 05.08.2022 DE 102022119694
(43) Veröffentlichungstag der Anmeldung: 11.06.2025
(62) Dokumentnummer(n) der früheren Anmeldung(en) nach Art. 76 EPÜ: 23175643.8 / 4 299 280
(73) Patentinhaber: Krones AG, 93073 Neutraubling (DE)
(72) Erfinder: Kindl, Norbert, 93073 Neutraubling (DE); Geltinger, Florian, 93073 Neutraubling (DE)
(74) Vertreter: Hannke Bittner & Partner mbB Regensburg

(56) Entgegenhaltungen:
- EP-B1- 2 435 235
- EP-B1- 3 200 968
- DE-U1- 202013 104 120
- US-A1- 2014 151 940

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden die Kunststoffvorformlinge üblicherweise innerhalb einer Blasformeinrichtung durch Beaufschlagung mit einem fließfähigen Medium zu den Kunststoffbehältnissen umgeformt. Die Blasformeinrichtungen weisen dabei üblicherweise zwei Blasformseitenteile und ein Bodenteil auf, welche gemeinsam einen Hohlraum ausbilden, welcher einer Negativkontur des fertigen Kunststoffbehältnisses entspricht. In jüngerer Zeit sind auch Vorrichtungen und Verfahren bekannt geworden, bei denen die Umformung der Kunststoffvorformlinge zu den Kunststoffbehältnissen innerhalb eines Reinraumes erfolgt. Auf diese Weise ist es beispielsweise möglich, dass bereits der gesamte Umformungsprozess unter sterilen Bedingungen erfolgt und daher anschließend die gefertigten Kunststoffbehältnisse nicht erneut oder nur mit verringertem Aufwand sterilisiert werden müssen. Aus dem Stand der Technik sind weiterhin sog. Blasformmaschinen bekannt, welche während des Blasvorgangs die Kunststoffvorformlinge auch in ihrer Längsrichtung dehnen. Hierbei handelt es sich insbesondere um sog. Streckblasmaschinen. Gattungsgemäße Vorrichtungen und Verfahren sind in den Patentschriften US2014/151940A1, EP2435235B1, EP3200968B1 und DE202013104120U1 beschrieben. 1

Um die Kunststoffvorformlinge in die Blasformeinrichtung einzubringen und die fertigen Kunststoffbehältnisse wieder aus den Blasformeinrichtungen zu entnehmen, werden die Blasformeinrichtungen geöffnet und geschlossen. Zur Ausführung der Bewegungen, wie das Öffnen und Schließen der Blasformeinrichtung, das An- und Abheben des Bodenteils, das Einführen der Beaufschlagungseinrichtung und der Reckstange in das Kunststoffbehältnis, etc., sind im internen Stand der Technik der Anmelderin mehrere Führungskurven mit entsprechenden Führungsrollen vorgesehen, über welche diese Bewegungen gesteuert werden.

Aus dem internen Stand der Technik der Anmelderin ist es dabei bekannt, dass in einer bestimmten Serie bzw. Baureihe einer Vorrichtung zum Umformen von Kunststoffvorformlingen zu Kunststoffbehältnissen die Führungskurven außerhalb des Reinraums angeordnet sind, wodurch der Reinraum deutlich verkleinert wird. Gleichzeitig muss der Reinraum aber groß genug für die Öffnungsbewegung der Blasformeinrichtung sein. Diese wird durch eine bewegliche Welle realisiert, an welcher die Blasformeinrichtung bzw. deren Seitenteile und Formträger gelagert sind, so dass ein Blasformseitenteil zum Öffnen und Schließen der Blasformeinrichtung bewegbar ausgebildet ist und das andere Blasformseitenteil unbeweglich. Ein großer Teil des Innenraums des Reinraums bleibt daher ungenutzt.

Darüber hinaus führt diese Anordnung auch zu einem deutlichen konzeptionellen Unterschied zu anderen Serien bzw. Baureihen von aus dem internen Stand der Technik der Anmelderin bekannten Vorrichtungen zum Umformen von Kunststoffvorformlingen zu Kunststoffbehältnissen und somit zu geringen Synergieeffekten und höheren Kosten.

Der vorliegenden Erfindung liegt daher die Aufgabe zugrunde, derartige Vorrichtungen und Verfahren flexibler und kostengünstiger zu gestalten. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen nach Anspruch 1 gerichtet.

Erfindungsgemäß erfolgt eine Öffnungs- und/oder Schließbewegung des ersten Formträgers um einen ersten Winkel und eine Öffnungs- und/oder Schließbewegung des zweiten Formträgers um einen zweiten Winkel, wobei der erste Winkel und der zweite Winkel im Wesentlichen identisch sind.

Es wird demnach erfindungsgemäß vorgeschlagen, anstatt einer beweglichen Welle, eine in Bezug zum Träger stationäre bzw. feststehende Welle vorzusehen und entsprechend die Öffnungsbewegung derart auszubilden, dass beide Formträger eine Öffnungs- bzw. Schließbewegung ausführen. Dabei sind, wie unten noch genauer erläutert wird, zudem auch die Führungskurven zum Teil innerhalb des Reinraums angeordnet, um die ungenutzten Räume des Reinraums besser auszunutzen.

Die erfindungsgemäße Vorrichtung hat zudem die Vorteile einer Kosteneinsparung und der Vereinheitlichung der Vorrichtungen zum Umformen von Kunststoffvorformlingen zu Kunststoffbehältnissen durch das Baukastenprinzip.

Bevorzugt führen demnach die beiden Formträger eine identische Bewegung aus, anstatt dass ein Formträger feststehend ausgebildet ist. Dies ist insbesondere vorteilhaft, da hierdurch weniger Platz für die Öffnungsbewegung benötigt wird. Die Hauptwelle, gegenüber der die Formträger bewegbar sind und an welcher die Formträger gelagert sind, ist bevorzugt innerhalb des Reinraums angeordnet. Die Hauptwelle verbindet dabei bevorzugt beide Formträger (mechanisch) miteinander. Vorteilhaft rotieren beide Formträger bezogen auf eine feststehende Lagerachse der Hauptwelle um den im Wesentlichen gleichen Winkel. Zwischen der Lagerachse und den Formträgern sind bevorzugt Lagerelemente in Form von abgedichteten Wälzlagern oder Gleitlagern angeordnet, die gegenüber einer metallischen Reibung einen deutlich reduzierten Reibwert aufweisen.

Besonders bevorzugt erfolgt die Öffnungs- und Schließbewegung der Formträger spiegelbildlich um eine geometrische Symmetrieachse. Bei der Öffnungs- und Schließbewegung der Formträger handelt es sich dabei bevorzugt um eine Schwenkbewegung und insbesondere eine Schwenkbewegung um einen vorgegebenen Winkel.

Die Bewegung der Formträger wird bevorzugt über wenigstens eine Führungskurve gesteuert, welche bevorzugt innerhalb des Reinraums angeordnet ist. Das Öffnen der Formträger dient bevorzugt insbesondere dazu, einen Kunststoffvorformling in die Blasformeinrichtung einzusetzen und nach der Umformung ein umgeformtes Kunststoffbehältnis wieder aus der Blasformeinrichtung entnehmen zu können. Auch zum Austauschen der Blasformteile, wie die Blasformseitenteile und das Bodenteil, ist ein Öffnen der Formträger erforderlich. Das Öffnen und Schließen der Formträger wird daher bevorzugt in bestimmten bzw. vorgegebenen Winkelbereichen des bewegbaren Trägers vorgenommen, wobei in diesem Bereich entsprechend auch die jeweilige Führungskurve angeordnet ist.

Dass die Öffnungs- und/oder Schließbewegung des ersten Formträgers um einen ersten Winkel und die Öffnungs- und/oder Schließbewegung des zweiten Formträgers um einen zweiten Winkel im Wesentlichen identisch sind, bedeutet dabei, dass dadurch gekennzeichnet, dass die Öffnungs- und/oder Schließbewegung des ersten Formträgers um den ersten Winkel und die Öffnungs- und/oder Schließbewegung des zweiten Formträgers um den zweiten Winkel um nicht mehr als 3° - 10°, bevorzugt um nicht mehr als 2° - 7 ° und besonders bevorzugt um nicht mehr als 1° - 5° voneinander abweichen. Der Öffnungswinkel zwischen den beiden Formträgern liegt dabei bevorzugt zwischen 0 und 150 Grad.

Bei der Vorrichtung zum Umformen von Kunststoffvorformlingen zu Kunststoffbehältnissen handelt es sich bevorzugt um eine Blasmaschine mit wenigstens einer Blasformeinrichtung bzw. Blasstation. Dies bedeutet, dass die Kunststoffvorformlinge zunächst in einer Heizstrecke thermisch konditioniert und anschließend durch Beaufschlagung mit einem flüssigen oder gasförmigen Medium expandiert werden. Das fließfähige Medium steht bevorzugt unter Druck. Für die Zuführung des unter Druck stehenden Mediums weist die Vorrichtung eine Blasdüse auf, welche an eine Mündung der Kunststoffvorformlinge dichtend anlegbar ist, um die Kunststoffvorformlinge so mit flüssigem oder gasförmigem Medium zu expandieren. Alternativ oder zusätzlich wäre es auch möglich dass die Blasdüse gegenüber einem Tragring des Kunststoffvorformlings oder der Blasform abdichtet.

Daneben ist bevorzugt auch eine Ventilanordnung vorgesehen, welche die Zuführung der Blasluft an die Kunststoffvorformlinge steuert. Alternativ ist es allerdings auch denkbar, dass die Expansion des Behältnisses mittels des Produkts erfolgt, so dass eine gleichzeitige Befüllung und Expansion des Behältnisses vorgenommen wird.

Bevorzugt handelt es sich bei der Blasmaschine um eine Streckblasmaschine, was bedeutet, dass die Vorformlinge vor und/oder während der Expansion mittels einer Reckstange in Längsrichtung gedehnt werden. Die Blasformeinrichtungen weisen dabei jeweils Reckstangen auf, welche in die Kunststoffvorformlinge einführbar sind und die Kunststoffvorformlinge in ihrer Längsrichtung dehnen. Die Reckstangen weisen dabei bevorzugt einen elektrischen Antrieb auf. Denkbar ist bevorzugt allerdings auch die Reckstangen über Kurven zu steuern.

Bei einer vorteilhaften Ausführungsform ist eine Vielzahl von Blasformeinrichtungen an dem (gemeinsamen) beweglichen Träger angeordnet. Bei diesem Träger handelt es sich dabei insbesondere um einen drehbaren Träger. Die Blasformeinrichtungen bzw. genauer die Formträger weisen zudem einen Verriegelungsmechanismen auf, um die Formträgerhälften während des Blasvorgangs gegeneinander zu verriegeln.

Die Blasformeinrichtungen werden bevorzugt innerhalb des Reinraums transportiert. Der Reinraum wird bevorzugt von mehreren Wandungen begrenzt. Bevorzugt wird der Reinraum dabei von wenigstens einer stehenden Wandung und einer sich gegenüber dieser stehenden Wandung bewegenden Wandung begrenzt. Der Reinraum grenzt die Blasformen insbesondere von einer unsterilen Umgebung ab. Vorteilhaft ist der Reinraum ring- oder torusartig um die Blasformeinrichtungen bzw. Umformungsstationen und/oder den Transportpfad der Kunststoffbehältnisse ausgebildet.

Bei einer bevorzugen Ausführungsform ist eine Lagerungseinrichtung für die Bewegung des Bodenteils innerhalb des Reinraums angeordnet. Bevorzugt verläuft eine Lagerungseinrichtung für die Bewegung des Bodenteils bzw. für die Bodenhubbewegung (im Wesentlichen) parallel zu der Längsrichtung bzw. Längsachse des Kunststoffbehältnisses.

Bei der Längsrichtung handelt es sich dabei insbesondere um eine Richtung entlang einer Mittelachse des Kunststoffbehältnisses. Die Mittelachse des Kunststoffbehältnisses erstreckt sich insbesondere (mittig) durch die Öffnung der Behältnismündung und auch insbesondere mittig durch einen Bodenbereich des Behältnisses, insbesondere durch einen Anspritzpunkt. In stehender Position des Behältnisses erstreckt sich die Mittelachse insbesondere parallel zu einer vertikalen Richtung. Eine stehende Position des Behältnisses bedeutet dabei, dass das Behältnis auf seinem Bodenbereich steht, welcher sich demnach näher am Erdmittelpunkt befindet als der Mündungsbereich des Behältnisses. Unter "in Längsrichtung betrachtet" wird daher vorliegend auch eine Position des Behältnisses verstanden, in welcher das Behältnis stehend angeordnet ist.

Durch die Anordnung einiger Teile bzw. Einrichtungen innerhalb des Reinraums wird der vorhandene Platz innerhalb des Reinraums optimal ausgenutzt. Da sich die Lagerungseinrichtung innerhalb des Reinraums befindet weist diese bevorzugt eine fettfreie Linearführung auf, um den Reinraum nicht zu verschmutzen.

Bei einer weiteren bevorzugten Ausführungsform handelt es sich bei der Lagerungseinrichtung für die Bewegung des Bodenteils bzw. die Bodenhubbewegung um einen Lagerkäfig und insbesondere einen Kugelkäfig. Der Kugelkäfig besteht dabei bevorzugt aus Kunststoffmaterialien oder einem Metall oder weist eine derartige Beschichtung auf.

Zum Öffnen und Schließen der Formträger ist dabei bevorzugt eine Formträgeransteuerung, wie beispielsweise eine Führungskurve vorgesehen. Die Formträgeransteuerung (Kupplung) weist bevorzugt ein Ausrastelement auf, welches bevorzugt außerhalb des Reinraums angeordnet ist. Bevorzugt durchdringt die Welle (Hauptwelle) der Formträgeransteuerung den Reinraum, ist jedoch nicht ortsfest mit dem Formträger verbunden.

In einer bevorzugten Ausführungsform weist die Vorrichtung eine mechanische Kopplungseinrichtung auf, welche dazu geeignet und bestimmt ist, die Bodenteilbewegung und die Öffnungs- und/oder Schließbewegung des ersten Formträgers und/oder des zweiten Formträgers miteinander zu koppeln. Die Kopplung kann dabei bevorzugt beispielsweise über eine weitere (Kopplungs)Führungskurve realisiert werden. Bevorzugt ist die Bodenhubbewegung mechanisch mit der Formträgeröffnungs- und Schließbewegung gekoppelt. Somit wird bei einem Öffnen oder Schließen der Formträger auch automatisch das Bodenteil gleichzeitig ab- oder angehoben.

Bei einer bevorzugten Ausführungsform weist die Vorrichtung eine kinematische Kopplungseinrichtung auf, welche dazu geeignet und bestimmt ist, um den ersten Formträger und den zweiten Formträger miteinander zu koppeln, wobei diese kinematische Kopplungseinrichtung bevorzugt innerhalb des Reinraums angeordnet ist.

Bei der kinematischen Kopplung handelt es sich dabei um eine Bewegungskopplung, so dass demnach eine Bewegung des einen Formträgers dazu führt, dass auch der andere Formträger bewegt wird.

Bei einer weiteren bevorzugten Ausführungsform weist die Vorrichtung eine Vielzahl von Führungskurven auf, welche aus einer Gruppe von Führungskurven ausgewählt sind, welche eine Verriegelungskurve, eine Bodenhubkurve, eine Hauptführungskurve, eine Blasdüsenkurve, eine Führungskurve für die Öffnungs- und Schließbewegung der Formträger und dergleichen enthält.

Besonders bevorzugt sind dabei die Verriegelungskurve und/oder die Bodenhubkurve und/oder die Führungskurve für die Öffnungs- und Schließbewegung der Formträger innerhalb des Reinraums angeordnet. Durch die zusätzliche Anordnung bestimmter Führungskurven innerhalb des Reinraums, anstatt außerhalb, erfolgt eine optimale Platzausnutzung des Reinraums.

Bevorzugt sind auch die jeweiligen zugehörige Führungsrollen der Verriegelungskurve und/oder der Bodenhubkurve und/oder der Führungskurve für die Öffnungs- und Schließbewegung der Formträger und dergleichen innerhalb des Reinraums angeordnet. Sowohl die Verriegelungskurve als auch die Bodenhubkurve sind dabei bezogen auf die Längsrichtung des Kunststoffbehältnisses unterhalb des Behälterbodens angeordnet.

Die Verriegelungskurve und die zugehörige Verriegelungsrolle dienen dabei bevorzugt dazu die Formträger im geschlossenen Zustand während des Blasformvorgangs zu verriegeln. Die Verriegelungskurve ist dabei durchgehend ausgebildet und erstreckt sich bevorzugt im Wesentlichen über die gesamte Umfangsrichtung unterhalb des Trägers, so dass die Formträger während des gesamten Blasformprozesses in einem verriegelten Zustand gehalten werden.

Die Verriegelungsrolle ist bevorzugt innerhalb des Reinraums angeordnet und bevorzugt direkt kinematisch mit einem Verriegelungselement der Verriegelungseinrichtung zum Verriegeln der Formträger gekoppelt. Da sich die Verriegelungskurve und/oder die Bodenhubkurve und/oder die Führungskurve für die Öffnungs- und Schließbewegung der Formträger innerhalb des Reinraums befinden werden diese bevorzugt mitsterilisiert, wenn der Reinraum sterilisiert wird.

Die Verriegelungseinrichtung weist bevorzugt eine bewegliche Verriegelungsklappe und ein Gegenstück zu dieser Verriegelungsklappe auf, wobei das Gegenstück der beweglichen Verriegelungsklappe bevorzugt den gleichen Bewegungsablauf wie der Formträger beschreibt und somit ortsfest mit dem Formträger verbunden ist.

Bei einer weiteren bevorzugten Ausführungsform sind die Hauptführungskurve und/oder die Blasdüsenkurve außerhalb des Reinraums angeordnet. Die Blasdüsenkurve bewirkt dabei bevorzugt die Zustellung der Blasdüse auf den Vorformling zu und entsprechend auch wieder von dem Vorformling weg.

Bevorzugt befindet sich dabei die zu der Hauptführungskurve und/oder der Blasdüsenkurve zugehörige Führungsrollen und dergleichen außerhalb des Reinraums.

Die vorliegende Erfindung ist weiter auf ein Verfahren zum Betreiben einer Vorrichtung zum Umformen von Kunststoffvorformlingen zu Kunststoffbehältnissen nach Anspruch 7 gerichtet.

Erfindungsgemäß wird der erste Formträger um einen ersten Winkel geöffnet und/oder geschlossen wird und der zweite Formträger um einen zweiten Winkel, wobei der erste Winkel und der zweite Winkel im Wesentlichen identisch sind.

Dabei ist die oben beschriebene Vorrichtung insbesondere dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus den beigefügten Zeichnungen.

Darin zeigt:
- Fig. 1: eine schematische Darstellung einer erfindungsgemäßen Vorrichtung;
- Fig. 2: eine schematische Darstellung einer erfindungsgemäßen Blasformeinrichtung; und
- Fig. 3: eine weitere schematische Darstellung einer erfindungsgemäßen Blasformeinrichtung.

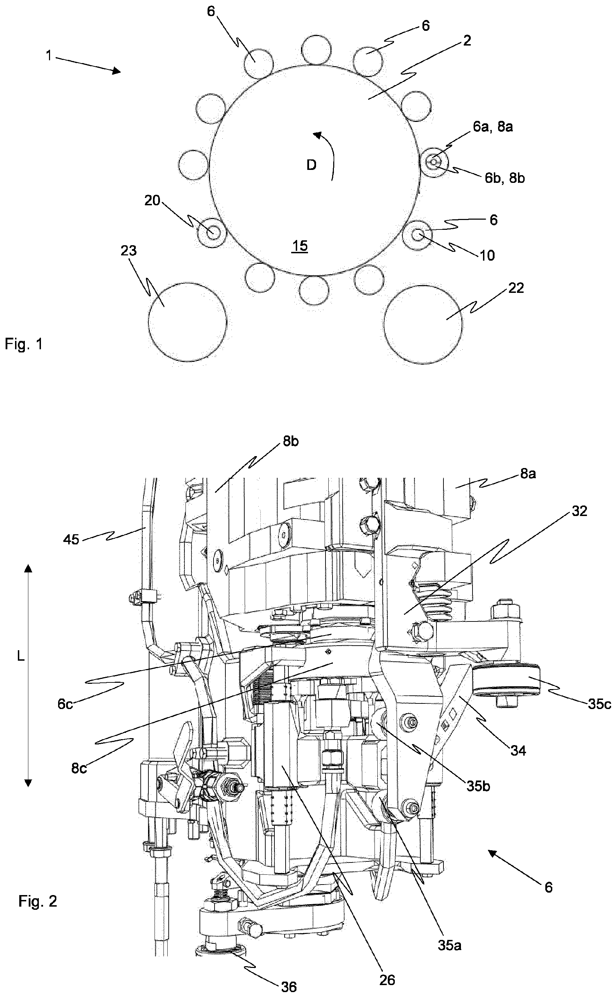

Die Figur 1 zeigt eine schematische Darstellung einer erfindungsgemäßen Vorrichtung 1 zum Umformen von Kunststoffvorformlingen 10 zu Kunststoffbehältnissen 20. Dabei werden die Kunststoffvorformlinge 10 über eine Zuführeinrichtung, wie etwa einem Zuführstern 22, der Vorrichtung 1 zugeführt und die fertigen Kunststoffbehältnisse 20 werden der Vorrichtung 1 über eine Abführeinrichtung, wie einen Abführstern 23, wieder abgeführt. Die Vorrichtung 1 weist einen drehbaren Träger 2 auf, an dem eine Vielzahl von Blasformeinrichtungen 6 angeordnet ist. Jede Blasformeinrichtung 6 weist dabei zwei Blasformseitenteile 6a, 6b und einen ersten Formträger 8a und einen zweiten Formträger 8b auf, an welchen die Seitenteile 6a, 6b angeordnet sind. Das Bezugszeichen 15 kennzeichnet einen Reinraum 15 und das Bezugszeichen D die Drehrichtung der Vorrichtung 1.

Die Figur 2 zeigt eine schematische Darstellung einer erfindungsgemäßen Blasformeinrichtung 6. Die Blasformeinrichtung weist hier zwei Blasformseitenteile (nicht erkennbar) auf sowie ein Bodenteil 6c. Die Blasformseitenteile sind dabei an den Formträgern 8a, 8b und das Bodenteil 6c an einem Bodenteilträger 8c.

Das Bezugszeichen 32 kennzeichnet die Verriegelungseinrichtung zum Verriegeln der Formträger 8a, 8b. Die Verriegelungseinreichung wird dabei über die Verrieglungsrolle 35c betätigt um die Formträger 8a, 8b, insbesondere während des Blasformvorgangs, fest zu verschließen.

Zum Öffnen und Schließen der Blasformeinrichtung 6 wird auch der Bodenteilträger 8c mit dem Bodenteil 6c abgesenkt. Hierzu ist eine Führungskurve 34 vorgesehen, welche mit einer Bodenhubrolle 35a und 35b zusammenwirkt und so die Hubbewegung des Bodenteils 6c ermöglicht. Die Führungskurve 34 ist dabei bevorzugt fest mit einem der beiden Formträger verbunden. Die Bodenhubsteuerung ist dabei über einen Lagerkäfig 26 wie insbesondere einen Kugelkäfig gelagert. Die Rolle 36 wirkt bevorzugt mit einer Kurve (nicht gezeigt) zusammen, um die Formträger zu Öffnen und/oder zu schließen.

Das Bezugszeichen 45 kennzeichnet Medienleitungen zur Versorgung der Blasformeinrichtung 6 mit fließfähigen Medien, wie beispielsweise Druckluft oder Kühlflüssigkeit. Das Bezugszeichen L kennzeichnet die Längsrichtung der Blasformeinrichtung 6 und auch der Kunststoffbehältnisse.

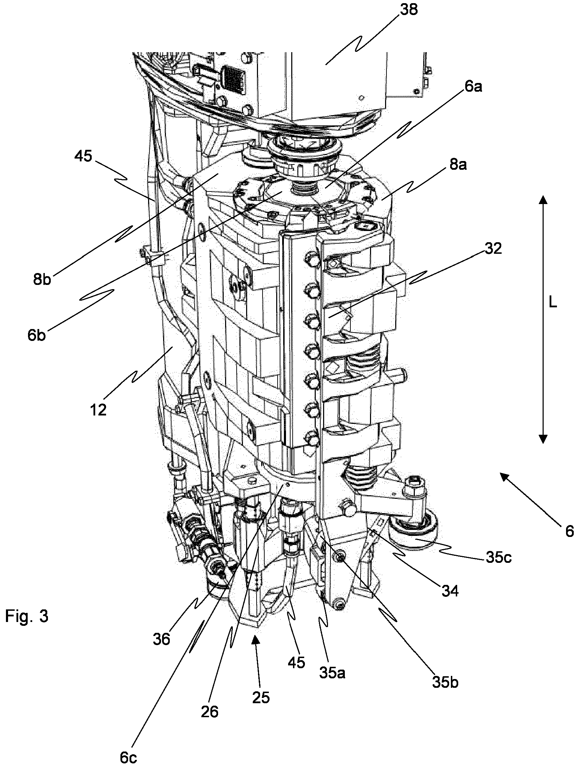

Figur 3 zeigt eine weiter schematische Darstellung einer erfindungsgemäßen Blasformeinrichtung 6. In dieser Darstellung sind ebenfalls die zwei Blasformseitenteile 6a, 6b der Blasformeinrichtung 6 erkennbar, welche an den Formträgern 8a, 8b angeordnet sind sowie das Bodenteil 6c. Die Blasformeinrichtung 6 bzw. genauer die Formträger 8a, 8b sind dabei an einer stationären Hauptwelle 12 gelagert, wobei die Formträger 8a, 8b gegenüber der Hauptwelle 12 bewegbar sind. Das Bezugszeichen 25 bezieht sich auf die Lagereinrichtung der Bodenhubbewegung, wie einen Lagerkäfig 26.

Das Bezugszeichen 38 kennzeichnet eine Ventlileinheit, durch welche eine nicht dargestellte Reckeinheit geführt wird.

### Bezugszeichenliste

- 1: Vorrichtung
- 2: Träger
- 6: Blasformeinrichtung
- 6a, 6b: Blasformseitenteile
- 6c: Bodenteil
- 8a: erster Formträger
- 8b: zweiter Formträger
- 8c: Bodenteilträger
- 10: Kunststoffvorformling
- 12: Hauptwelle
- 15: Reinraum
- 20: Kunststoffbehältnis
- 22: Zuführstern
- 23: Abführstern
- 25: Lagereinrichtung
- 26: Lagerkäfig
- 32: Verriegelungseinrichtung
- 34: Verriegelungskurve
- 35a, 35b, 35c: Verriegelungsrollen
- 36: Bodenhubrolle
- 38: Reckeinheit
- 45: Medienleitungen
- D: Drehrichtung
- L: Längsrichtung

## Patentansprüche

1. Vorrichtung (1) zum Umformen von Kunststoffvorformlingen (10) zu Kunststoffbehältnissen (20) mit einem bewegbaren Träger (2), an welchem eine Vielzahl von Blasformeinrichtungen (6) angeordnet sind, wobei die Blasformeinrichtung wenigstens zwei Blasformseitenteile (6a, 6b) und ein in einer Längsrichtung (L) des Kunststoffbehältnisses (20) bewegbares Bodenteil (6c) aufweist, wobei die Blasformseitenteile (6a, 6b) und das Bodenteil (6c) einen Hohlraum ausbilden, innerhalb dessen die Kunststoffvorformlinge (10) durch Beaufschlagung mit einem fließfähigen Medium zu den Kunststoffbehältnissen (20) umformbar sind, wobei die Blasformseitenteile (6a, 6b) jeweils an einem ersten Formträger (8a) und einem zweiten Formträger (8b) angeordnet sind, welche gegenüber einer zu dem Träger (2) stationären Hauptwelle (12) zum Öffnen und/oder Schließen bewegbar sind, und die Vorrichtung (1) innerhalb eines Reinraums (15) angeordnet ist, wobei
eine Öffnungs- und/oder Schließbewegung des ersten Formträgers (8a) um einen ersten Winkel erfolgt und eine Öffnungs- und/oder Schließbewegung des zweiten Formträgers (8b) um einen zweiten Winkel erfolgt, wobei der erste Winkel und der zweite Winkel im Wesentlichen identisch sind,
**dadurch gekennzeichnet, dass**
eine Lagerungseinrichtung (25) für die Bewegung des Bodenteils (6c) innerhalb des Reinraums (15) angeordnet ist, wobei eine Lagerungseinrichtung (25) für die Bewegung des Bodenteils (6c) parallel zu der Längsrichtung (L) des Kunststoffbehältnisses (20) verläuft und es sich bei der Lagerungseinrichtung (25) für die Bewegung des Bodenteils (6c) um einen Kugelkäfig handelt.

2. Vorrichtung (1) nach Anspruch 1,
**dadurch gekennzeichnet, dass**
die Vorrichtung (1) eine mechanische Kopplungseinrichtung aufweist, welche dazu geeignet und bestimmt ist, die Bodenteilbewegung und die Öffnungs- und/oder Schließbewegung des ersten Formträgers (8a) und/oder zweiten Formträgers (8b) miteinander zu koppeln.

3. Vorrichtung (1) nach Anspruch 1,
**dadurch gekennzeichnet, dass**
die Vorrichtung (1) eine kinematische Kopplungseinrichtung aufweist, welche dazu geeignet und bestimmt ist, den ersten Formträger (8a) und den zweiten Formträger (8b) miteinander zu koppeln, wobei diese kinematische Kopplungseinrichtung bevorzugt innerhalb des Reinraums (15) angeordnet ist.

4. Vorrichtung (1) nach Anspruch 1,
**dadurch gekennzeichnet, dass**
die Vorrichtung (1) eine Vielzahl von Führungskurven aufweist, welche aus einer Gruppe von Führungskurven ausgewählt sind, welche eine Verriegelungskurve, eine Bodenhubkurve, eine Hauptführungskurve, eine Blasdüsenkurve, eine Führungskurve für die Öffnungs- und Schließbewegung der Formträger und dergleichen enthält.

5. Vorrichtung (1) nach Anspruch 4,
**dadurch gekennzeichnet, dass**
die Verriegelungskurve und/oder die Bodenhubkurve und/oder die Führungskurve für die Öffnungs- und Schließbewegung der Formträger innerhalb des Reinraums (15) angeordnet sind.

6. Vorrichtung (1) nach Anspruch 4,
**dadurch gekennzeichnet, dass**
die Hauptführungskurve und/oder die Blasdüsenkurve außerhalb des Reinraums (15) angeordnet sind.

7. Verfahren zum Betreiben einer Vorrichtung (1) zum Umformen von Kunststoffvorformlingen (10) zu Kunststoffbehältnissen (20), mit einem bewegbaren und insbesondere drehbaren Träger (2), an welchem eine Vielzahl von Blasformeinrichtungen (6) angeordnet sind mit einer Blasformeinrichtung (6) mit wenigstens zwei Blasformseitenteilen (6a,6b) und einem Bodenteil (6c), welches in einer Längsrichtung (L) des Kunststoffbehältnisses (20) bewegbar ist und/oder bewegt wird, wobei die Blasformseitenteile (6a, 6b) und das Bodenteil (6c) einen Hohlraum ausbilden, innerhalb dessen die Kunststoffvorformlinge (10) mit einem fließfähigen Medium beaufschlagt werden und zu den Kunststoffbehältnissen (20) umgeformt werden, wobei die Blasformseitenteile (6a, 6b) jeweils an einem ersten Formträger (8a) und einem zweiten Formträger (8b) angeordnet sind, welche gegenüber einer zu dem Träger (2) stationären Hauptwelle (12) zum Öffnen und/oder Schließen bewegt werden, und die Vorrichtung (1) innerhalb eines Reinraums (15) angeordnet ist, wobei
der erste Formträger (8a) um einen ersten Winkel geöffnet und/oder geschlossen wird und der zweite Formträger (8b) um einen zweiten Winkel, wobei der erste Winkel und der zweite Winkel im Wesentlichen identisch sind,
**dadurch gekennzeichnet, dass**
eine Lagerungseinrichtung (25) für die Bewegung des Bodenteils (6c) innerhalb des Reinraums (15) angeordnet ist, wobei eine Lagerungseinrichtung (25) für die Bewegung des Bodenteils (6c) parallel zu der Längsrichtung (L) des Kunststoffbehältnisses (20) verläuft und es sich bei der Lagerungseinrichtung (25) für die Bewegung des Bodenteils (6c) um einen Kugelkäfig handelt.

## Claims

1. Apparatus (1) for forming plastic preforms (10) into plastic containers (20), comprising a movable carrier (2), on which a plurality of blow-molding devices (6) are arranged, wherein each blow-molding device comprises at least two blow-molding side parts (6a, 6b) and a bottom part (6c) movable in a longitudinal direction (L) of the plastic container (20), wherein the blow-molding side parts (6a, 6b) and the bottom part (6c) form a cavity within which the plastic preforms (10) can be formed into the plastic containers (20) by applying a flowable medium to them, wherein the blow-molding side parts (6a, 6b) are each arranged on a first mold carrier (8a) and a second mold carrier (8b), which are movable relative to a main shaft (12)-which is stationary with respect to the carrier (2)-for opening and/or closing, and the apparatus (1) is arranged within a cleanroom (15), wherein
an opening and/or closing movement of the first mold carrier (8a) occurs by a first angle and an opening and/or closing movement of the second mold carrier (8b) occurs by a second angle, wherein the first angle and the second angle are substantially identical,
**characterized in that**
a bearing device (25) for moving the bottom part (6c) is arranged within the cleanroom (15), wherein the bearing device (25) for moving the bottom part (6c) extends parallel to the longitudinal direction (L) of the plastic container (20), and the bearing device (25) for moving the bottom part (6c) is a ball cage.

2. The apparatus (1) according to claim 1,
**characterized in that**
the apparatus (1) comprises a mechanical coupling device that is suitable and intended to couple the movement of the bottom part with the opening and/or closing movement of the first mold carrier (8a) and/or second mold carrier (8b).

3. The apparatus (1) according to claim 1,
**characterized in that**
the apparatus (1) comprises a kinematic coupling device that is suitable and intended to couple the first mold carrier (8a) and the second mold carrier (8b) to one another,
wherein this kinematic coupling device is preferably arranged within the cleanroom (15).

4. The apparatus (1) according to claim 1,
**characterized in that**
the apparatus (1) comprises a plurality of guide cams selected from a group of guide cams that includes a locking cam, a bottom stroke cam, a main guide cam, a blow nozzle cam, a guide cam for the opening and closing movement of the mold carriers, and the like.

5. The apparatus (1) according to claim 4,
**characterized in that**
the locking cam and/or the bottom stroke cam and/or the guide cam for the opening and closing movement of the mold carriers are arranged within the cleanroom (15).

6. The apparatus (1) according to claim 4,
**characterized in that**
the main guide cam and/or the blow nozzle cam are arranged outside the cleanroom (15).

7. A method for operating an apparatus (1) for forming plastic preforms (10) into plastic containers (20), comprising a movable and, in particular, rotatable carrier (2), on which a plurality of blow-molding devices (6) are arranged, each blow-molding device (6) comprising at least two blow-molding side parts (6a, 6b) and a bottom part (6c), which is movable and/or is moved in a longitudinal direction (L) of the plastic container (20), wherein the blow-molding side parts (6a, 6b) and the bottom part (6c) form a cavity within which the plastic preforms (10) are applied with a flowable medium and are formed into the plastic containers (20), wherein the blow-molding side parts (6a, 6b) are each arranged on a first mold carrier (8a) and a second mold carrier (8b), which are moved relative to a main shaft (12)-which is stationary with respect to the carrier (2)-to open and/or close, and the apparatus (1) is arranged within a cleanroom (15), wherein
the first mold carrier (8a) is opened and/or closed by a first angle and the second mold carrier (8b) by a second angle, wherein the first angle and the second angle are substantially identical,
**characterized in that**
a bearing device (25) for moving the bottom part (6c) is arranged within the cleanroom (15), wherein the bearing device (25) for moving the bottom part (6c) extends parallel to the longitudinal direction (L) of the plastic container (20), and the bearing device (25) for moving the bottom part (6c) is a ball cage.

## Revendications

1. Dispositif (1) destiné à mettre en forme des préformes en matière plastique (10) en des récipients en matière plastique (20) avec un support (2) mobile, sur lequel sont disposés une pluralité de système de moulage par soufflage (6), dans lequel le système de moulage par soufflage présente au moins deux parties latérales de moulage par soufflage (6a, 6b) et une partie de base (6c) pouvant être déplacée dans une direction longitudinale (L) du récipient en matière plastique (20), dans lequel les parties latérales de moulage par soufflage (6a, 6b) et la partie de base (6c) réalisent une cavité à l'intérieur de laquelle les préformes en matière plastique (10) peuvent être mises en forme en les récipients en matière plastique (20) en étant soumises à l'action d'un milieu fluide, dans lequel les parties latérales de moulage par soufflage (6a, 6b) sont disposées respectivement sur un premier support de moule (8a) et un deuxième support de moule (8b), qui peuvent être déplacés respectivement pour l'ouverture et/ou la fermeture par rapport à un arbre principal (12) fixe par rapport au support (2), et le dispositif (1) est disposé à l'intérieur d'une salle blanche (15), dans lequel un mouvement d'ouverture et/ou de fermeture du premier support de moule (8a) s'effectue autour d'un premier angle et un mouvement d'ouverture et/ou de fermeture du deuxième support de moule (8b) s'effectue autour d'un deuxième angle, dans lequel le premier angle et le deuxième angle sont sensiblement identiques,
**caractérisé en ce que**
un système de montage (25) pour le mouvement de la partie de base (6c) est disposé à l'intérieur de la salle blanche (15), dans lequel un système de montage (25) pour le mouvement de la partie de base (6c) s'étend parallèlement à la direction longitudinale (L) du récipient en matière plastique (20) et le système de montage (25) pour le mouvement de la partie de base (6c) est une cage à billes.

2. Dispositif (1) selon la revendication 1,
caractérisé en ce
le dispositif (1) présente un dispositif de couplage mécanique qui est adapté pour et se destine à coupler le déplacement de la partie de base et le mouvement d'ouverture et/ou de fermeture du premier support de moule (8a) et/ou du deuxième support de moule (8b) l'un à l'autre.

3. Dispositif (1) selon la revendication 1,
caractérisé en ce
le dispositif (1) présente un système de couplage cinématique qui est adapté pour et se destine à coupler le premier support de moule (8a) et le deuxième support de moule (8b) l'un à l'autre, dans lequel ledit système de couplage cinématique est de manière préférée disposé à l'intérieur de la salle blanche (15).

4. Dispositif (1) selon la revendication 1,
**caractérisé en ce que**
le dispositif (1) présente une pluralité de cames de guidage qui sont choisies parmi un groupe de cames de guidage qui contient une came de verrouillage, une came de levage de base, une came de guidage principale, une came de buse de soufflage, une came de guidage pour le mouvement d'ouverture et de fermeture des supports de moule et similaires.

5. Dispositif (1) selon la revendication 4,
**caractérisé en ce que**
la came de verrouillage et/ou la came de levage de base et/ou la came de guidage pour le mouvement d'ouverture et de fermeture des supports de moule sont disposées à l'intérieur de la salle blanche (15).

6. Dispositif (1) selon la revendication 4,
**caractérisé en ce que**
la came de guidage principale et/ou la came de buse de soufflage sont disposées à l'extérieur de la salle blanche (15).

7. Procédé de fonctionnement d'un dispositif (1) pour la mise en forme de préformes en matière plastique (10) en des récipients en matière plastique (20), avec un support (2) pouvant être déplacé et en particulier pouvant être tourné, sur lequel sont disposés une pluralité de systèmes de moulage par soufflage (6), avec un système de moulage par soufflage (6) avec au moins deux parties latérales de moulage par soufflage (6a, 6b) et une partie de base (6c), laquelle peut être déplacée et/ou est déplacée dans une direction longitudinale (L) du récipient en matière plastique (20), dans lequel les parties latérales de moulage par soufflage (6a, 6b) et la partie de base (6c) réalisent une cavité, à l'intérieur de laquelle les préformes en matière plastique (10) sont soumises à l'action d'un milieu fluide et sont mises en forme en les récipients en matière plastique (20), dans lequel les parties latérales de moulage par soufflage (6a, 6b) sont disposées respectivement sur un premier support de moule (8a) et un deuxième support de moule (8b), qui sont déplacés pour l'ouverture et/ou la fermeture par rapport à un arbre principal (12) fixe par rapport au support (2), et le dispositif (1) est disposé à l'intérieur d'une salle blanche (15), dans lequel
le premier support de moule (8a) est ouvert et/ou fermé autour d'un premier angle et le deuxième support de moule (8b) autour d'un deuxième angle, dans lequel le premier angle et le deuxième angle sont sensiblement identiques,
**caractérisé en ce que**
un système de montage (25) pour le mouvement de la partie de base (6c) est disposé à l'intérieur de la salle blanche (15), dans lequel un système de montage (25) pour le mouvement de la partie de base (6c) s'étend parallèlement à la direction longitudinale (L) du récipient en matière plastique (20) et le système de montage (25) pour le mouvement de la partie de base (6c) est une cage à billes.
